# EUROPEAN PATENT SPECIFICATION

(11) **EP 1 849 695 B1**
(45) Date of publication and mention of the grant of the patent: **02.09.2009**
(21) Application number: 06122922.5
(22) Date of filing: 25.10.2006
(51) Int. Cl.: B62K 3/00

(54) **Pedal scooter**
Tretroller mit Pedalen
Trottinette à pédale

(43) Date of publication of application: 31.10.2007
(73) Proprietor: Chiu, Po-Lin, Zuoyung District 813 Kaohsiung City (TW); Tsai, Shern-Ji, Sanmin District 807 Kaohsiung City (TW); Chang, Ching-Piao, Fongshan City Kaohsiung County 830 (TW)
(72) Inventor: Chiu, Po-Lin, Zuoyung District 813 Kaohsiung City (TW); Tsai, Shern-Ji, Sanmin District 807 Kaohsiung City (TW); Chang, Ching-Piao, Fongshan City Kaohsiung County 830 (TW)
(74) Representative: Chaillot, Geneviève

(56) References cited:
- EP-A- 1 362 782
- GB-A- 2 241 476
- US-A- 2 723 131
- US-A1- 2002 163 159

## Description

The present invention relates to a scooter. In particular, it relates to a pedal scooter with enhanced stability and durability.

US 2002/0163159 A1 discloses a pedal scooter according the preamble of claim 1.

GB 2 241 476 A discloses a step-drive pedal scooter comprising two drive pedals for each foot of the user to propel the step-drive pedal scooter by stepwise actuating the pedals.

EP 1 362 782 A1 discloses a scooter which is propelled by virtue of forward and rearward swinging its steering rod.

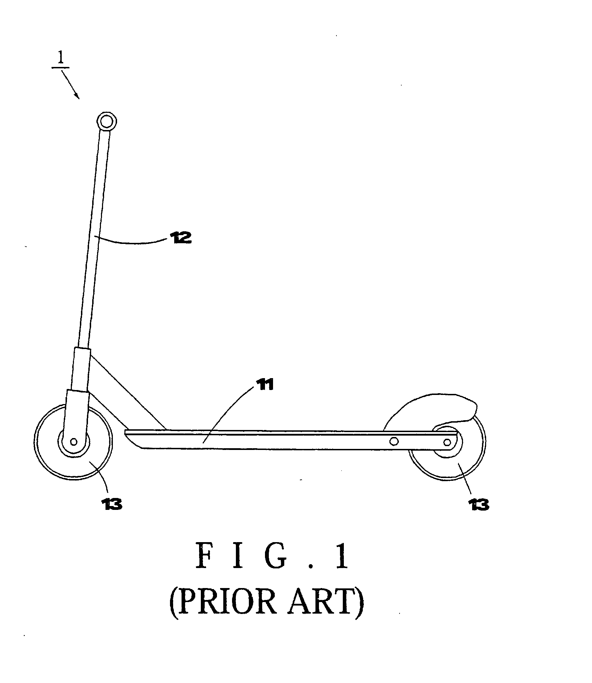

Referring to Fig.1, a conventional scooter comprises a frame 11, a steering rod 12 and a pair of wheels 13; wherein the steering rod 12 is pivoted to the frame 11, and has a handlebar 121 thereon. The pair of wheels 13 is pivotally coupled to two sides of the frame 11; one of the wheels 13 is connected to the steering rod 12. In operation, the user first propels the scooter to move forwards, and then kicks on the ground with one foot to propel again. However, propelling with one foot has limitation in increasing the speed, and the balance of the scooter is not stable.

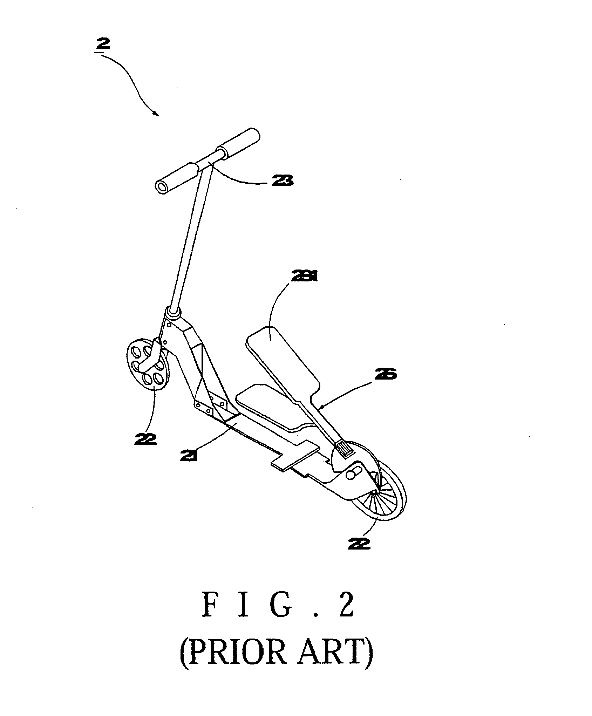

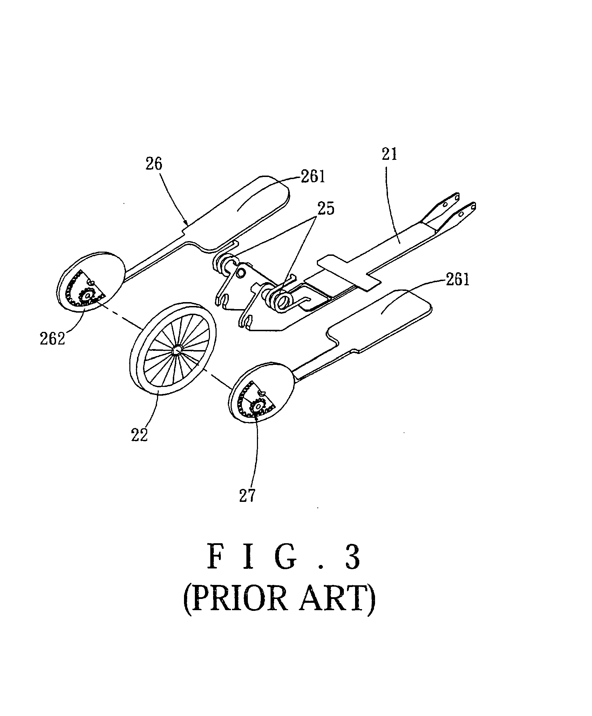

Referring to FIG. 2 and 3, the power scooter 2 comprises a frame 21, a pair of wheels 22 connected to the frame 21, a handlebar 23, an elastic body 25, a pedal assembly 26 and a one-way transmission bearing 27. The pedal assembly 26 comprises two pedals 261 disposed to both sides of the frame 21, and a transmission sprocket 262 extending from the pedals 261 and engaged with the one-way transmission bearing 27. Further, the one-way transmission bearing 27 and the wheel 22 are coupled together; therefore, the one-way transmission bearing 27 can rotate the wheel 22. Along with the elastic body 25 set between the frame 21 and the pedals 261, the pedals 261 will then be stepped repeatedly.

While in use, repeat stepping on the pedals 261 drives the transmission sprocket 262 and the one-way transmission bearing 27 to rotate in a specific direction, which in turn further rotates the wheels 22 forwards. However, due to the two pedals 261 disposed on both sides of the frame 21, the space for standing is quite limited. Therefore, it is quite difficult for a user to step on the pedals 261. Moreover, the frame 21 will easily be out of balance and shake. In addition, because the wheels 22 of conventional scooter are over small, safety becomes a concern.

The present invention provides a pedal scooter which relies on a user's weight for stepping on the pedal repeatedly for rotation power of wheels. The stepping process is stable and can achieve great exercising effect.
The present invention comprises a frame, a steering rod, a plurality of wheels, a drive assembly, and two transmission assemblies disposed on the frame. The drive assembly comprises a pedal pivotally disposed on the frame, and one elastic body connected between the pedal and the frame. Further, the transmission assemblies are disposed on both sides of the wheels of the frame; each of the aforesaid transmission assembly comprises a curved rack connected to the pedal, a first sprocket wheel engaging with the curved rack on the frame, a second sprocket wheel engaging with the first sprocket wheel, a third sprocket wheel disposed on the wheel and engaging with the second sprocket wheel, and a one-way bearing disposed between the first and second sprocket wheels. Therefore, a user only needs to step on the pedal repeatedly, and the elastic body disposed between the pedal and the frame springs up and down to make the two transmission assemblies rotate, and make the wheels rotate. Accordingly, this invention has the benefit of being stable in operation and of achieving greater exercising effect.

### BRIEF DESCRIPTION OF THE DRAWINGS

The accompanying drawing is included to provide a further understanding of the invention, and constitutes a part of this specification. The drawing illustrates an embodiment of the invention and, together with the description, serves to explain the principles of the invention. In the drawing,
FIG.1 is a plan view of a conventional scooter;
FIG.2 is an another perspective view of a conventional power scooter;
FIG.3 is a perspective diagram showing the transmission structure of the conventional power scooter;
FIG.4 is a perspective diagram showing a preferred embodiment of the present invention;
FIG.5 is a perspective diagram showing the drive assembly and the transmission assembly of the present invention;
FIG.6 is a perspective diagram showing the one-way bearing of the present invention;
FIG. 7 is a cross-sectionview showing the one-waybearing engaging with second sprocket wheel of the present invention;
FIG.8 is perspective diagram showing the present inventionbeing folded according to the preferred embodiment; and
FIG.9 and 10 is a perspective view showing the transmission assembly rotating of the present invention.

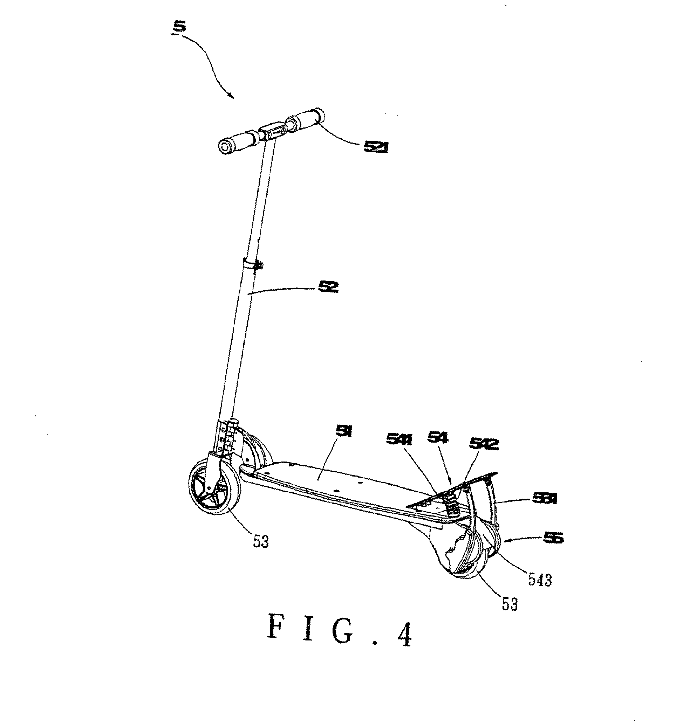

Referring to FIG.4, the preferred embodiment of the present invention comprises one frame 51, one steering rod 52, a plurality of wheels 53, one drive assembly 54 and two transmission assemblies 55. The steering rod 52 is pivotally disposed on the frame 51, and the steering rod 52 disposed on the handlebar 521. Further, the wheels 53 are pivotally coupled to the frame 51 and the steering rod 52 to control the advancing direction with the steering rod 52.

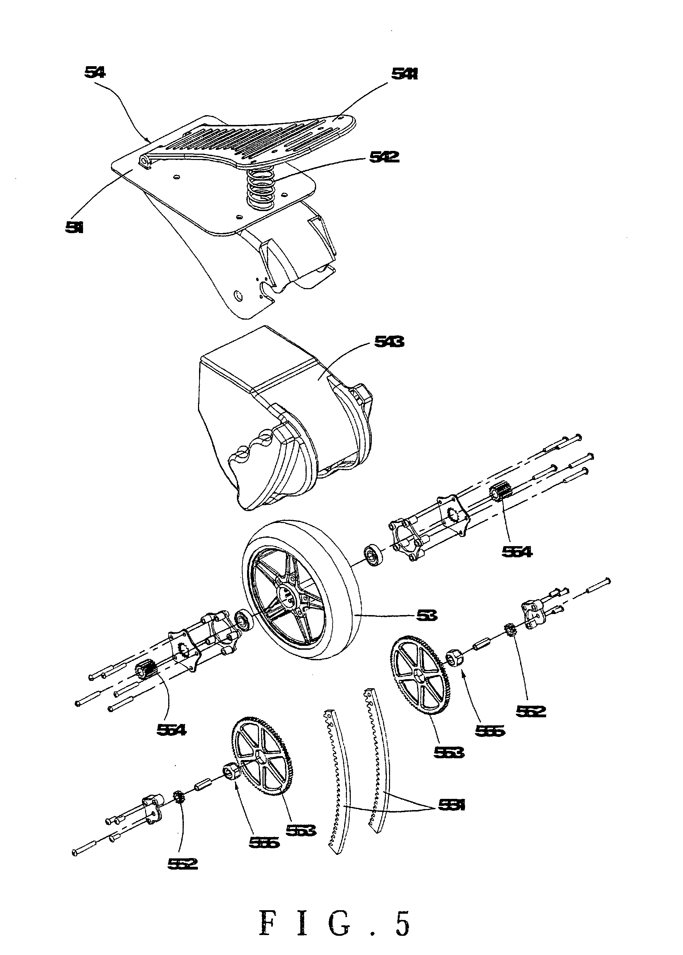

Referring to FIG. 5, the drive assembly 54 comprises one pedal 541 disposed on said frame 51 pivotally, and one elastic body 542(such as spring) coupled between the said pedal 541 and the said frame 51. A mudguard 543 is disposed on the frame 51 and extends to the wheel 53. While an external force applies to the pedal 541, it will return to the original position due to the reverse force of the elastic body 542. Meanwhile, the splash dirt from the wheel 53 will be blocked by the mudguard 543.

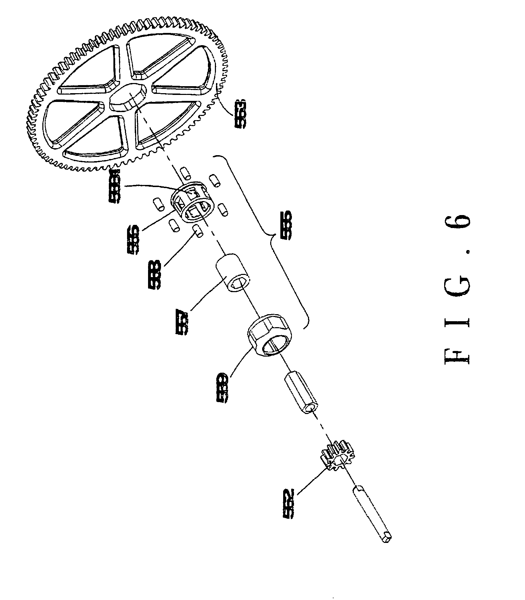

Referring to FIG. 5 and 6, said two transmission assemblies 55 are disposed on each of the two sides of the said wheel 53. Each of the transmission assemblies 55 comprises a curved rack 551 connected to the pedal 541, a first sprocket wheel 552 engaged with the curved rack 551, a second sprocket wheel 553 engaged with the first sprocket wheel 552, a third sprocket wheel 554 disposed to the wheel 53 and engaged with the second sprocket wheel 553, and a one-way bearing 555 disposed between the first and second sprocket wheels 552, 553.

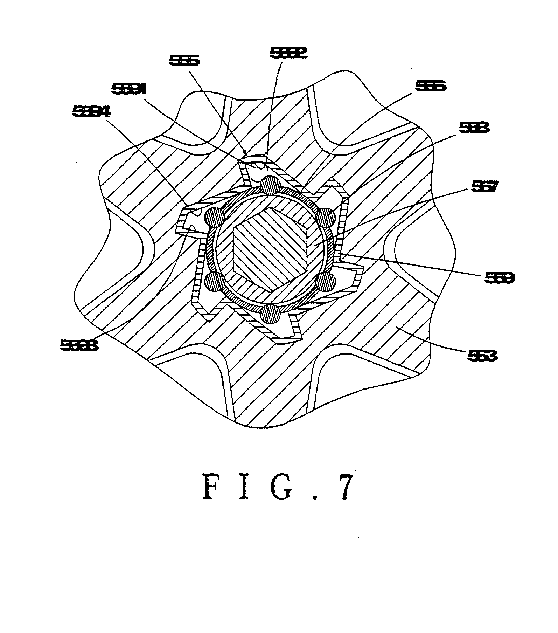

Accompanying with FIG. 7, the aforesaid one-way bearing comprises a retaining sheath 556, a spindle 557 located through the retaining sheath 556, a plurality of rollers 558 disposed in the retaining sheath556, and a rotated sheath 559 disposed outside the retaining sheath 556 and driven by the second sprocket wheel 553. The retaining sheath 556 has a plurality of apertures 5561 thereon to retain the said rollers 558. A plurality of recesses 5591 are disposed inside the rotated sheath 559. Furthermore, each said recess 5591 has a bottom wall 5592, a side surface 5593 extending upwardly from the bottom wall 5592, and an inclined surface 5594 extending upwardly from the bottom wall 5592 and connecting with the side surface 5593 at the adjacent recess.

While the second sprocket wheel 553 is operating, the first sprocket wheel 552 rotates, which in turn pushes the spindle 557 circling, further to make the rollers 558 move toward the inclined surface 5594, and finally get held in between the space between the spindle 557 and inclined surface 5594. Thus, the first sprocket wheel 552 delivers power through the roller 558 to push the second sprocket wheel 553. In contrast, while circling in counter-clockwise direction, the spindle 557 pushes rollers 558 into the recesses 5591 (as the imagination line showing) . Therefore, the power of the first sprocket wheel 552 can not deliver through the rollers 558, causing the first sprocket wheel 552 idling.

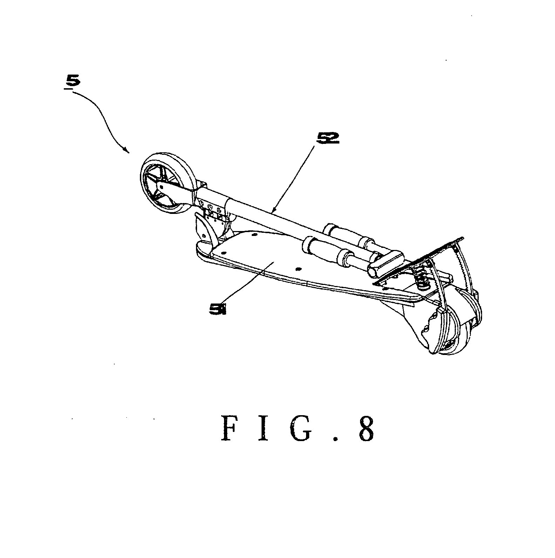

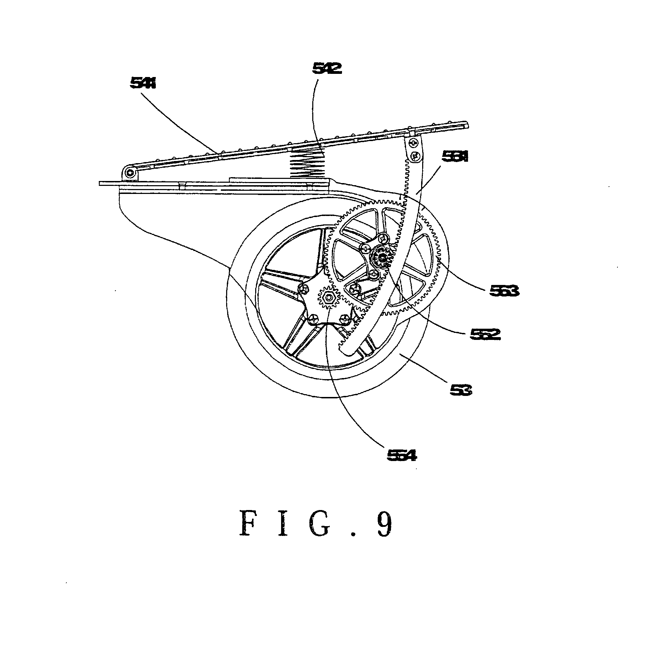

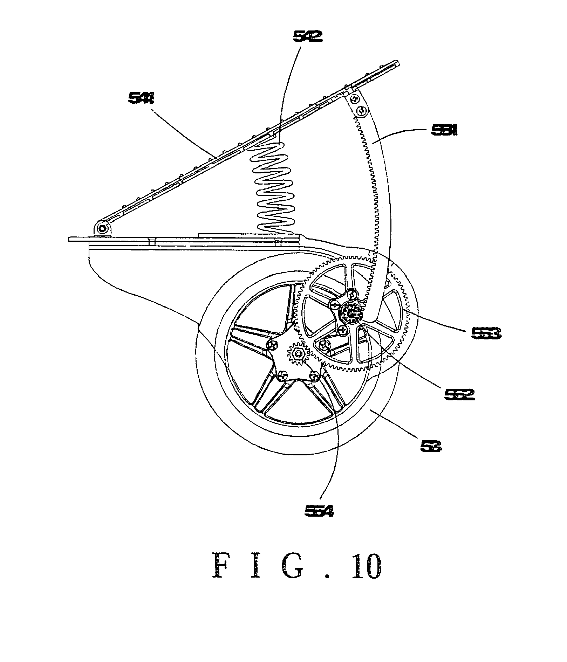

Referring to FIG. 8, while the pedal scooter is not used, the steering rod 52 can be bent down to connect with frame 51 for convenient storage. When in use, a user only needs to pull up the steering rod 52 so the pedal scooter 5 can be unfold as showing in FIG. 4. Referring to FIG.9, the user holds the steering rod 52 in hand to control the moving direction. Further, the user steps on the pedal 541 with one foot as the interlock state showing in FIG.9 and 10. That is, relying on the reversing power of the elastic body 542 for supporting, the pedal 541 will be pushed upwardly to make the curved rack 551 move up and down to rotate the first sprocket wheel 552, which in turn pushes the second sprocket wheel 553 to rotate right away. The rotating of first sprocket wheel 552, which moves the second sprocket wheel 553, is made possible by the one-way bearing 555 disposed between the two sprocket wheels; the one-way bearing 555 makes the first sprocket wheel 552 rotate the second sprocket wheel 553 in one direction only, not allowing for rotating in a reverse direction, which would counteract the rotating power of second sprocket wheel 553. As a result, the second sprocket wheel 553 moves the third sprocket wheel 554, which in turn rotates the wheel 53 as a forwarding power, enhancing the controlling stabilities while the two transmission assemblies 55 are still delivering power. In addition, a user's weight applied to the pedal repeatedly in operation also achieves the exercising effect. To sum up, the invention makes use of the drive assembly to rotate the two transmission assemblies disposed on the frame; therefore, it could move the wheel rotate more stably than prior arts. Moreover, whenever a user wants to move the scooter forwards, he only needs to step on the drive assembly repeatedly to rotate the transmission assemblies for advancing the scooter, also achieving an exercising effect.

## Claims

1. A pedal scooter comprising:
a frame (51);
a steering rod (52) disposed on the frame (51) pivotally, and extending with a handlebar (521) thereon;
a plurality of wheels (53) pivotally connected to the frame (51) and the steering rod (52), wherein one of said wheel (53) is rotated by the steering rod (52) for controlling the advancing direction;
a drive assembly (54) comprising a pedal (541) pivotally disposed on the frame (51), and an elastic body (542) coupled between the pedal (541) and the frame (51);
two transmission assemblies (55) are connected to two sides of the wheels thereon the frame (51) separately, **characterized in that** each said transmission assembly (55) comprises a curved rack (551) connected to the pedal (541), a first sprocket wheel (552) engaged with the curved rack (551) thereon the frame (51), a second sprocket wheel (553) engaged with the first sprocket wheel (552), a third sprocket (554) wheel disposed on the wheel and engaged with the second sprocket wheel (553), and a one-way bearing (555) disposed between the first and second sprocket wheels (552, 553), wherein, the diameter of the first sprocket wheel (552) is smaller than the second sprocket wheel (553).

2. The pedal scooter as claimed in claim 1, wherein a mudguard (543) is disposed on the frame (51) and extending to the wheel (53).

3. The pedal scooter as claimed in claim 1, wherein the one-waybearing (555) comprises a retaining sheath (556), a spindle (557) located through the retaining sheath (556), a plurality of rollers (558) disposed in the retaining sheath (556), and a rotated sheath (559) disposed outside the retaining sheath (556) and rotated with the second sprocket wheel (553) ; said retaining sheath (556) having a plurality of apertures (5561) thereon to retain the said rollers (558), a plurality of recesses (5591) disposed inside the rotated sheath (559), each saidrecess (5591) having a bottom wall (5592), a side surface (5593) extending upwardly from the bottom wall (5592), and a inclined surface (5594) extending from the bottom wall (5592) to connect with the side surface (5593) of the adjacent recess (5591).

## Patentansprüche

1. Ein Tretroller mit Pedalen, der folgendes umfasst:
einen Rahmen (51);
eine Lenkstange (52), die schwenkbar am Rahmen (51) angeordnet ist und sich mit einem Lenkerbügel (521) darauf erstreckt;
eine Mehrzahl von schwenkbar mit dem Rahmen (51) und der Lenkstange (52) verbundenen Rädern (53), wobei eines der Räder (53) von der Lenkstange (52) rotiert wird, um die Lenkrichtung zu bestimmen;
eine Fahrkonstruktion (54), die ein schwenkbar am Rahmen (51) angeordnetes Pedal (541) und einen elastischen Körper (542) umfasst, der zwischen das Pedal (541) und den Rahmen (51) gekoppelt ist;
zwei Getriebekonstruktionen (55), die separat mit zwei Seiten der Räder am Rahmen (51) verbunden sind,
**dadurch gekennzeichnet, dass**
jede Getriebekonstruktion (55) eine gebogene mit dem Pedal (541) verbundene Zahnstange (551) umfasst, ein erstes Zahnrad (552), das in die gebogene Zahnstange (551) am Rahmen (51) eingreift, ein zweites Zahnrad (553), das in das erste Zahnrad (552) eingreift, ein drittes Zahnrad (554), das am Rad angeordnet ist und in das zweite Zahnrad (553) eingreift und ein zwischen dem ersten und dem zweiten Zahnrad (552, 553) angeordnetes Freilauflager (555), wobei der Durchmesser des ersten Zahnrades (552) kleiner ist, als das zweite Zahnrad (553).

2. Der Tretroller mit Pedal gemäß Anspruch 1, wobei ein Schutzblech (543) am Rahmen (51) angeordnet ist und sich zum Rad (53) erstreckt.

3. Der Tetroller mit Pedal gemäß Anspruch 1, wobei das Freilauflager (555) eine Haltehülse (556) umfasst, eine durch die Haltehülse (556) verlaufende Welle (557), eine Mehrzahl von Rollen (558), die in der Haltehülse (556) angeordnet sind und eine rotierende Hülse (559), die außerhalb der Haltehülse (556) angeordnet ist und mit dem zweiten Zahnrad (553) rotiert wird; die Haltehülse (556) eine Mehrzahl von Öffnungen (5561) darauf aufweist, um die Rollen (558) zu halten, eine Mehrzahl von Ausnehmungen (5591), die im Inneren der rotierenden Hülse (559) angeordnet sind, jede der Ausnehmungen (5591) eine untere Wand (5592), eine Seitenfläche (5593), die sich von der unteren Wand (5592) nach oben erstreckt, und eine geneigte Fläche (5594) aufweist, die sich von der unteren Wand (5592) aus erstreckt, um sich mit der Seitenfläche (5593) der angrenzenden Ausnehmung (5591) zu verbinden.

## Revendications

1. - Trottinette à pédale comprenant :
- un cadre (51) ;
- un tube de direction (52) disposé sur le cadre (51) de façon pivotante, et s'étendant avec un guidon (521) sur celui-ci ;
- une pluralité de roues (53) reliées de façon pivotante au cadre (51) et au tube de direction (52), l'une desdites roues (53) étant amenée à tourner par le tube de direction (52) pour commander la direction d'avancement ;
- un ensemble d'entraînement (54) comprenant une pédale (541) disposée de façon pivotante sur le cadre (51), et un corps élastique (542) couplé entre la pédale (541) et le cadre (51) ;
- deux ensembles de transmission (55) qui sont séparément reliés aux deux côtés des roues sur le cadre (51),
**caractérisé par le fait que** chacun desdits ensembles de transmission (55) comprend une crémaillère incurvée (551) reliée à la pédale (514), une première roue dentée (552) coopérant avec la crémaillère incurvée (551) sur le cadre (51), une seconde roue dentée (553) coopérant avec la première roue dentée (552), une troisième roue dentée (554) disposée sur la roue et coopérant avec la seconde roue dentée (553), et un palier unidirectionnel (555) disposé entre les première et seconde roues dentées (552, 553), le diamètre de la première roue dentée (552) étant inférieur à celui de la seconde roue dentée (553).

2. - Trottinette à pédale selon la revendication 1, dans laquelle un garde-boue (543) est disposé sur le cadre (51) et s'étend vers la roue (53).

3. - Trottinette à pédale selon la revendication 1, dans laquelle le palier unidirectionnel (555) comprend une gaine de retenue (556), un axe (557) situé à travers la gaine de retenue (556), une pluralité de rouleaux (558) disposés dans la gaine de retenue (556), et une gaine rotative (559) disposée à l'extérieur de la gaine de retenue (556) et amenée à tourner avec la seconde roue dentée (553) ; ladite gaine de retenue (556) ayant une pluralité d'ouvertures (5561) sur celle-ci pour retenir lesdits rouleaux (558), une pluralité de cavités (5591) disposées dans la gaine rotative (559), chacune desdites cavités (5591) ayant une paroi inférieure (5592), une surface latérale (5593) s'étendant vers le haut à partir de la paroi inférieure (5592) et une surface inclinée (5594) s'étendant à partir de la paroi inférieure (5592) pour se relier à la surface latérale (5593) de la cavité adjacente (5591).
